# EUROPEAN PATENT APPLICATION

(11) **EP 0 703 126 A2**
(43) Date of publication of application: **27.03.1996**
(21) Application number: 95114206.6
(22) Date of filing: 11.09.1995
(51) Int. Cl.: B60R 25/00, G08G 1/017, G07C 5/08, G07F 7/08

(54) **Modular protection and control system**

(30) Priority: 16.09.1994 BR 9403093
(71) Applicant: L.E.I. Sistemas Eletronicos Ltda., Campinas (SP) (BR)
(72) Inventor: Rodriguez, Raul Roberto Novais, Campinas (SP) (BR)
(74) Representative: Petraz, Gilberto Luigi

(57) **Abstract**

Modular protection and control system including a read-out module (1) fitted with a control keyboard (5), a reading device (6) for recovery of information and a display window (4) showing the information read, a personal identification module (2,2) composed of a card on which is recorded information and an object identification module (3,3') on which are also recorded information.

Modules (2) and (3) are respectively in possession of the owner of the object to be protected and on the object itself.

Through the module (1), it is possible to recover the information recorded on them and identify a stolen object.

## Description

The present invention refers to a modular protection and control system for high value movable objects such as vehicles, weapons, boats, plants, suitcases, containers and the like.

More specifically, the object of the present invention includes a system constituted by personal and object-related identification modules to be installed close to the object to be protected, as well as a read-out module to recover the information contained in said modules.

Specially in the area of automotive vehicles protection, various protection systems are known to prevent eventual robberies, among which outstands the installation of alarms enabled by the attempt to steal the vehicle, such alarms being inclusively able to block the ignition system of said vehicles, as well as operate an alarm sound signal.

However, if either by the skill or knowledge of the thief such an alarm is disabled, there is no further control on the stolen vehicle.

On the other hand, some forms of identification of the vehicle are known which include engraving chassis number on various parts of the vehicle's chassis, as well as on the windshield or windows in order to hinder any attempt to adulterate such numbers.

Nevertheless, even so, it is possible to alter the number engraved on the chassis by mechanical action, as well as replace the identified windows and windshields.

Thus, in order to solve the inconvenience of the state-of-art, a modular protection and control system is now available which includes a read-out module provided with a control keyboard, a reading device to recover the information obtained, a personal identification module composed of a card on which are recorded information and an identification module of the object in which are also recorded information.

By means of this system, it is possible to obtain an intelligent identification of the object to be protected, initially from the data (contained in information cells placed on the object) relative to said object (model, serial number, register numbers, etc.), being such memory unalterable, as well as auxiliary memories which contain alterable information about the present owner of the object, as well as a complimentary data of this same object.

These auxiliary memories being also located in the information cells placed on the object.

Furthermore, the availability of a personal card is foreseen, also including data regarding the object and its owner or authorized person in order to serve as comparison means for the above-identified data.

Thus, if an inspection is made on such object, the inspection authority will recover the data about the object which are kept in the information cells installed on the object, leading inclusively to an easy check of eventual structural damage to same and will compare the data to the information contained in the personal card in possession of the owner.

Thus, in case it is not possible to recover the data because of damage caused to the information cells, or if this data does not coincide with the existing data on personal cards, the robbery will be evident, allowing thus an easy recovery of the object.

The present invention will be better understood at the light of the following description, applied as an example to automotive vehicles being it understood that it can be used in various distinct object in the same operating form, as described hereinafter.

Furthermore, attached are illustrative figures not limited to the scope of invention and in which:
- Figure 1 is a front view of a read-out and data display module;
- Figure 2 is a bottom view of the chip support circuit which constitutes the information cell;
- Figures 3A and 3B represent respectively perspective views of information cells reading devices;
- Figures 4A and 4B represent respectively illustrative views of the personal card for electronic system and for alternative optical system; and
- Figure 5 is a top view of an object identification module in an alternative constructive form of the present invention.

The present invention includes in a summary form, a read-out and data display module (1), a personal identification unit (2) and at least one vehicle identification unit (3).

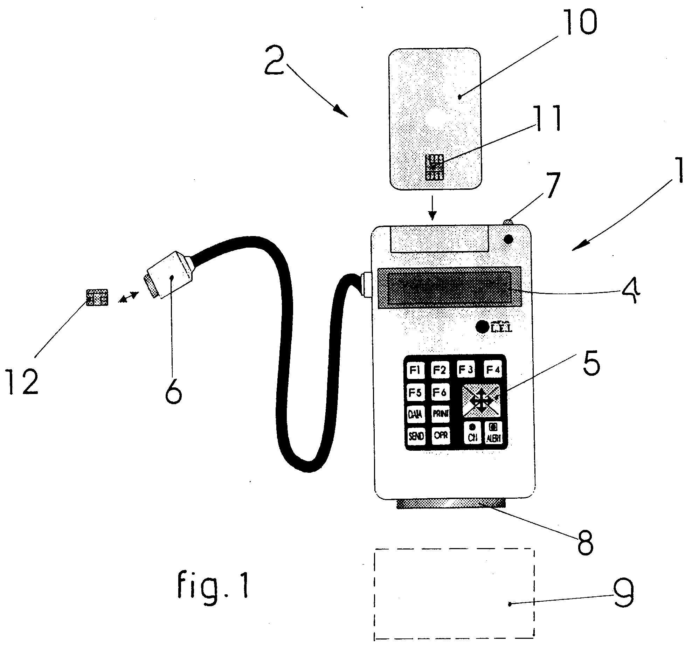

The read-out module (1) is composed of a portable, read-out apparatus with a memory chip (see figure 1) including a display screen (4), a keyboard (5), an output connection for a reading device (6) and a led emitter (7).

Furthermore, the adoption of a serial output (8) is foreseen, preferentially of the RS232/C type to be coupled to a computer (9).

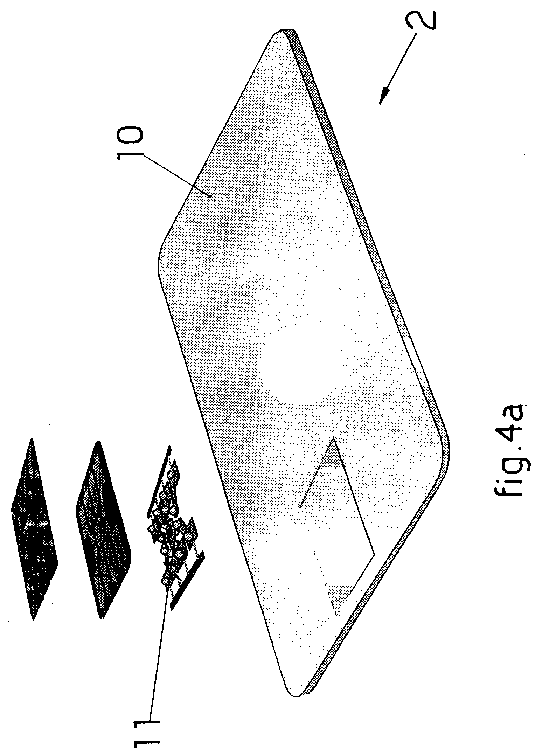

The personal identification unit (2) (see figure 4A) is composed of a card (10) of the "smart" type, i.e. containing a memory chip (11) with recoverable pre-programmed information.

In case the vehicle in question is frequently used by more than one person, the system foresees the adoption of as many personal cards (10) as may be necessary, being that in the other personal cards apart from the owner's data an identification of the authorized user is also recorded.

Furthermore, the information contained in the memory chips (11) of these cards (10) cannot be altered.

In case the vehicle is sold, such cards (10) belonging to the previous owner will be returned and destroyed, being new cards (10) issued to the new purchaser and in which will be recorded his personal information.

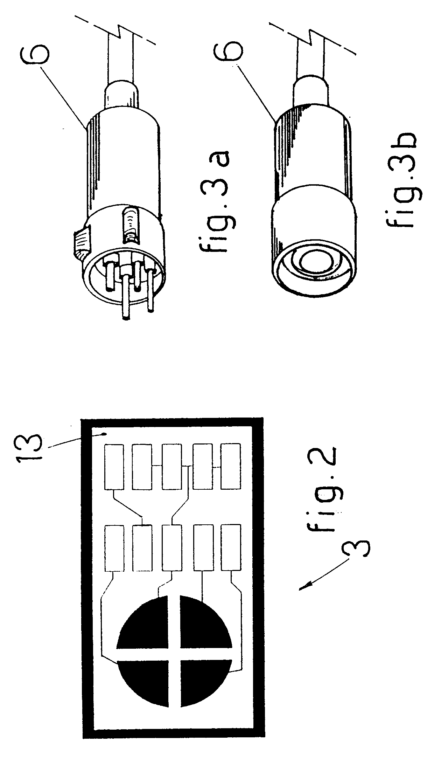

The vehicle identification unit (3) is formed by a memory chip (12) similar to the one adopted for the personal card (10), being this chip located on a board (13) as illustrated in Figure 2.

Said units (3) are fixed close to pre-determined parts of the vehicle (not illustrated) such as, preferentially, one on the central dashboard, one on the chassis, one in the engine compartment, and one in the luggage compartment.

In particular, the units are installed in the vehicle with one unit in an easy access and easy visualization location, while the other units are fixed in strategic and concealed locations to make their localization difficult.

In an alternative form of realization of the present invention, the information about the cadastral data of vehicle, owner's date, etc. are recorded in a cryptographic form.

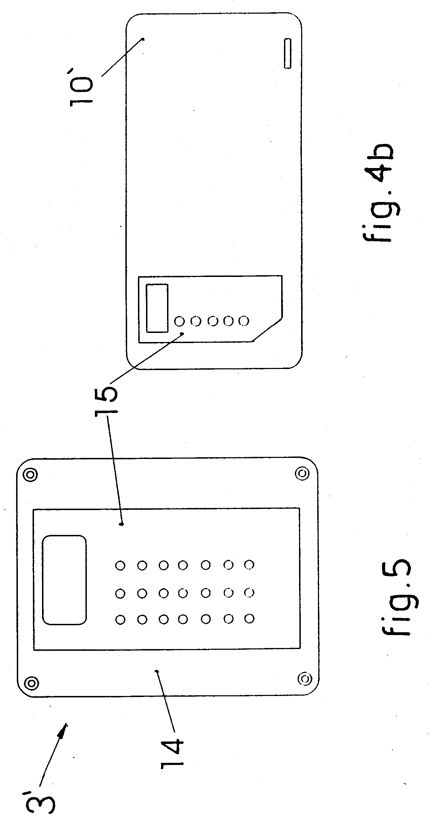

Thus, the personal card (10') in possession of the owner/driver will show the information in a cryptographic form as illustrated in Figure 4B.

In a similar way, the object identification module (3')(see figure 5) is composed by a support board (14) on which is fixed a hologram (15) with the cryptographic information, being this module or the set of units constituting this module (3') also applied, one in a visible form for easy and quick localization and the other ones concealed in strategic locations on the vehicle as reported above.

In the same regard, the read-out module is similar to the previous one, with the difference that it is fitted with an optical reading device (not illustrated) for the interpretation of cryptographic information existing on the personal card (10'), as well as on the vehicle identification units.

The operation of the present system is rather simple allowing a quick identification of the vehicle and of its present legal status.

When a new vehicle leaves the production line and receives from the plant the chassis number and other cadastral information, such as year, color, model, etc., this information is immediately recorded on the unalterable memory of the chips (11) of each of the cards (10).

In order that such recording be made, it is necessary to use a first recording password which will only allow entry and respective recording in the respective unalterable memory, without however giving access to the other memories.

The vehicle thus already partially protected is transferred to distributors that on selling such vehicles to their final owner, perform the recording of the personal data of these owners in one of the alterable memories, as well as on personal cards (10) and on the identification units (3) already installed in the vehicles.

In order to record such information, the distributor has a second recording password which allows access only to that auxiliary memory.

Once this step is completed, the vehicle is duly protected and ready for use.

On the other hand, the read-out module (1) is foreseen to be used mainly by policemen, but can also be read by any other person that may have an interest in the correct identification of the vehicle, for instance card traders, insurance companies, etc.

With this module (1) in hand such policeman can, by reading the chip (12) or hologram (15), e.g. with one or the other of the reading devices 6-6' of Figures 3A and 3B, identify the information contained in same, for example, the name of the vehicle's owner, the vehicle's license plate number, chassis number, etc. which appear in the display window (4) of such read-out module (1) and this can be compared with the existing data in vehicle's documents, as well as the other forms of exteriorization of the information presently used on the vehicles, as for instance the application of chassis number to windshield and other windows and in various other locations accessible to inspection.

In order to be able to perform this reading, a reading password is provided to the read-out module (3) using the keyboard (4) or by a magnetic strip on the personal card (not illustrated).

As an assurance form of the information, the owner of the vehicle must always bear with him the card (10,10') which hologram or chip also bears the same information and thus the agent may compare them in order to get a better control.

In case of any doubt about this information, the agent may request the reading of one of the other units on the vehicle (one of the concealed units, for example), in case there are signs of violation of the main unit.

Finally, the read-out module is also fitted with ports (8) for connection to a computer (9) and also features a memory unit.

In this way, the law agent can charge the memory of read-out unit (1) with updated information on, for instance, stolen vehicles, this situation being indicated on the display window (4) of read-out unit (1) in case an identification unit is read by same.

It is also possible to get a print-out of the information on reviewed vehicles for control purposes, through the led emitter (7) which, in a known way, emits the information stored in the read-out module (1) to a printer or directly to a computer (9) for control purposes and further print-out.

## Claims

1. A modular protection and control system characterized by the fact that it includes a read-out module (1) fitted with a control keyboard (5), a reading device (6) for recovery of information and a display window (4) to show the information read, a personal identification module (2,2') composed of a card on which are recorded information and an object identification module (3,3') on which are also recorded information.

2. A system as per claim 1 characterized by the fact that said information corresponds to cadastral data of vehicle, which cannot be altered and to owner's personal data that may be altered, being so that such information is recorded in electronic form on a memory chip (11,12).

3. A system as per claim 2 characterized by the fact that such unalterable information corresponds to cadastral data of vehicle which cannot be altered and owner's personal data which may be altered being so that such information is recorded in a cryptographic form.

4. A system as per claim 2 characterized by the fact that such information alterable or not can only be recorded and/or recovered by means of access passwords.

5. A system as per claim 1 characterized by the fact that such read-out module (1) has an emitter led (7) allowing connection to a printer and an output port (8), preferentially serial, for connection to a computer (9).

6. A system as per claim 1 characterized by the fact that such personal identification module (2) includes a card of the smart type (10).

7. A system as per claim 6 characterized by the fact that alternatively said personal identification module (2') includes a card (10') formed by a support board (14), on which is installed a hologram (15) containing information in a cryptographic form.

8. A system as per claim 1 characterized by the fact that said object identification module (3) is composed of various units each one formed by a memory chip (12) installed on a chip plate (13), each of the units being fixed on the object to be protected.

9. A system as per claim 8 characterized by the fact that said object identification module (3') is composed by various units, each one formed by a hologram (15) installed on a support plate (14) each of the plates being fixed to the object to be protected.
